# EUROPEAN PATENT APPLICATION

(11) **EP 1 860 470 A1**
(43) Date of publication of application: **28.11.2007**
(21) Application number: 07108829.8
(22) Date of filing: 24.05.2007
(51) Int. Cl.: G02B 6/00

(54) **A Light Guide Panel and a Backlight Unit Using the Same**

(30) Priority: 26.05.2006 KR 20060047698
(71) Applicant: Samsung Electronics Co., Ltd., Suwon-si, Gyeonggi-Do (KR); Dae Young One Co., Ltd., Gyeongsangbuk-do (KR)
(72) Inventor: Park, Seong-Ha c/o Samsung Electronics Co., Ltd., Gyenggi-do (KR); Yoon, Hee-Sang c/o Samsung Electronics Co., Ltd., Gyeonggi-do (KR); Han, Sang-Woon c/o Samsung Electronics Co., Ltd., Gyeonggi-do (KR); Park, Joong-Wan c/o Samsung Electronics Co., Ltd., Gyeonggi-do (KR)
(74) Representative: Zimmer, Franz-Josef

(57) **Abstract**

A light guide panel has upper and lower surfaces, which are opposite from each other, and first and second side surfaces, which are opposite from each other, to guide light rays inputted therein through the first side surface, toward the second side surface through internal reflection between the upper and lower surfaces. The light guide panel includes a plurality of dot patterns formed on the lower surface to reflect and diffuse incident light rays; first prism projections formed on the upper surface and extending parallel to one another to transmit and concentrate light rays reflected by the dot patterns; and second prism projections formed on the upper surface to be crossed with the first prism projections and extending parallel to one another to transmit and concentrate light rays reflected by the dot patterns.

## Description

### BACKGROUND OF THE INVENTION

### 1. Field of the Invention

The present invention relates to a backlight unit (BLU) for a flat display device, and more particularly to a backlight unit using a light guide panel (LGP).

### 2. Description of the Related Art

A liquid crystal display (LCD), as a representative of flat display devices, does not generate light by itself. Unlike a plasma display panel (PDP) or a field emission display (FED), which are light-emitting type display devices, the LCD requires external illumination, such as a backlight unit, for providing uniform illumination over the entire surface thereof.

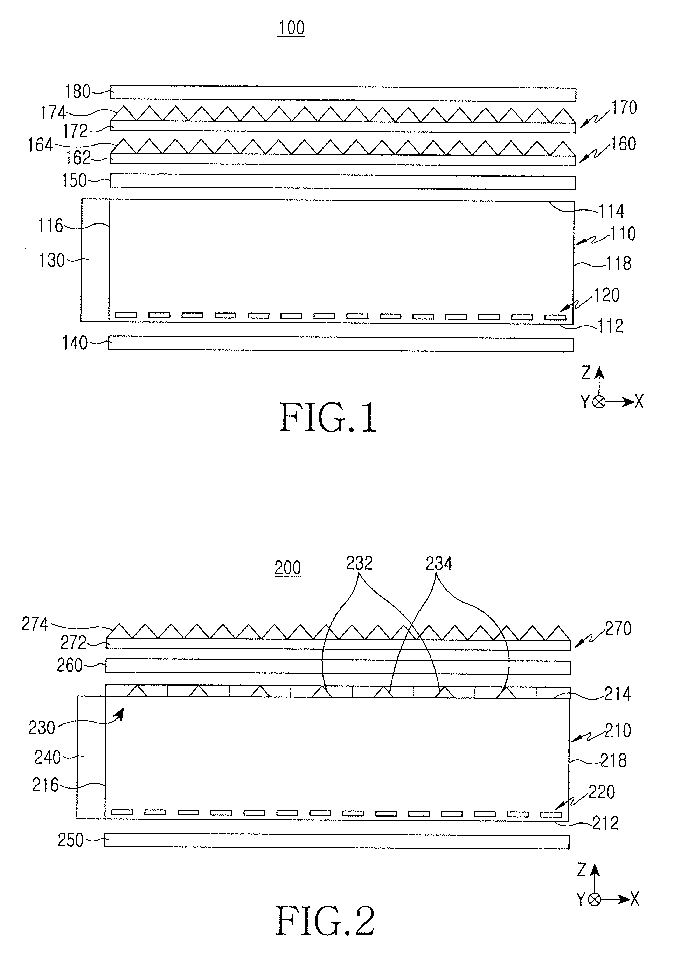

FIG. 1 is a side view illustrating a conventional backlight unit. As shown, the backlight unit 100 includes a reflection panel 140, a light source 130, a light guide panel 110, first and second diffusion panels 150 and 180, and first and second prism sheets 160 and 170. In the coordinate system shown in FIG. 1, the Z-axis represents the illumination direction of the backlight unit 100, the direction normal to the upper surface 114 of the light guide panel 110; the X-axis represents the advancing direction of the light emitted from the light source 130; and the Y-axis represents the direction perpendicular to the X-axis and the Z-axis.

The light guide panel 110 has upper and lower surface 114 and 112, which are opposite from each other, and first and second side surfaces 116 and 118, which are opposite from each other. The light source 130 faces and emits light rays toward the first side surface 116 of the light guide panel 110. The light guide panel 110 guides the light rays introduced from the first side surface 116 toward the second side surface 118 through internal reflection between the upper and lower surfaces 114 and 112. The light guide panel 110 has a plurality of dot patterns 120 which are uniformly formed on the lower surface 112 thereof. Each dot pattern 120 is in the shape of a hemispherical groove, and reflects and diffuses the incident rays. In particular, each dot pattern 120 prevents total internal reflection condition on an interface between the light guide panel 110 and external air such that the light rays reflected and diffused by the dot pattern 120 can be transmitted through the upper surface 114 of the light guide panel 110. When analyzing the brightness distribution appearing on the upper surface 114 of the light guide panel 110, low brightness is obtained when a viewing angle is 0° and higher brightness is obtained as a viewing angle increases. The viewing angle of 0° means that an observer views on the Z-axis.

The reflection panel 140 is located such that the upper surface thereof faces the lower surface 112 of the light guide panel 110. The reflection panel 140 reflects the light rays transmitted through the lower surface 112 of the light guide panel 110 and redirects the reflected light rays into the light guide panel 110.

The first diffusion panel 150 is located such that the lower surface thereof faces the upper surface 114 of the light guide panel 110. The first diffusion panel 150 scatters and transmits inputted light rays. The first and second diffusion panels 150 and 180 scatter incident light rays, and function to uniformize the brightness distribution which is concentrated over high viewing angles.

The first prism sheet 160 is located such that the lower surface thereof faces the upper surface of the first diffusion panel 150. The first prism sheet 160 includes a base plate 162 and a plurality of prism projections 164, which project from the upper surface of the base plate 162 and extend parallel to one another. At this time, the prism projections 164 are arranged along the X-axis, along the direction normal to the first side surface 116 of the light guide panel 110. The first prism sheet 160 concentrates and transmits inputted light rays through the vertical planes thereof, in the Y-Z planes. Each of the first and second prism sheets 160 and 170 provides brightness enhancement at low viewing angles.

The second prism sheet 170 is located such that the lower surface thereof faces the upper surface of the first prism sheet 160. The second prism sheet 170 includes a base plate 172 and a plurality of prism projections 174 which project from the upper surface of the base plate 172 and extend parallel to one another. At this time, the prism projections 174 are arranged along the Y-axis, along the direction perpendicular to the normal of the first side surface 116 of the light guide panel 110. The second prism sheet 170 concentrates and transmits inputted light rays through the vertical planes thereof, in the X-Z planes.

The second diffusion panel 180 is located such that the lower surface thereof faces the upper surface of the second prism sheet 170. The second diffusion panel 180 scatters and transmits inputted light rays.

The conventional backlight unit 100 constructed described above, however, has the following problems.

First, as the backlight unit 100 of the convention backlight unit 100 must use two costly prism sheets 160 and 170, the manufacturing cost and the thickness of the backlight unit 100 are high.

Second, an optical insertion loss occurs in the conventional backlight unit 100, as the rays emitted through the upper surface 114 of the light guide panel 110 are transmitted through the first and second prism sheets 160 and 170. Such an optical insertion loss contributes to the deterioration of the optical efficiency of the conventional backlight unit 100.

### SUMMARY OF THE INVENTION

Accordingly, the present invention has been made to solve the above-mentioned problems occurring in the prior art and provides additional advantages, by providing a light guide panel and a backlight unit using the same which can improve optical efficiency and lower manufacturing cost.

One aspect of the present invention provides a light guide panel having upper and lower surfaces, which are opposite from each other, and first and second side surfaces, which are opposite from each other, for guiding light rays inputted therein through the first side surface toward the second side surface through internal reflection between the upper and lower surfaces. The light guide panel includes a plurality of dot patterns formed on the lower surface to reflect and diffuse incident light rays; first prism projections that are formed on the upper surface and that are parallel to one another, to transmit and concentrate light rays reflected by the dot patterns; and second prism projections that are formed on the upper surface to cross the first prism projections and that are parallel to one another, to transmit and concentrate light rays reflected by the dot patterns.

Another aspect of the present invention provides a backlight unit including a light guide panel having upper and lower surfaces, which are opposite from each other; first and second side surfaces, which are opposite from each other, to guide light rays inputted therein through the first side surface toward the second side surface through internal reflection between the upper and lower surfaces; and a light source facing the first side surface of the light guide panel to output light rays toward the first side surface. The light guide panel includes a plurality of dot patterns formed on the lower surface to reflect and diffuse incident light rays; and a prism pattern formed on the upper surface to have prism projections in the shape of a letter X, for transmitting and concentrating light rays reflected by the dot patterns.

### BRIEF DESCRIPTION OF THE DRAWINGS

The above features and advantages of the present invention will be more apparent from the following detailed description taken in conjunction with the accompanying drawings, in which:
FIG. 1 is a side view illustrating a conventional backlight unit;
FIG. 2 is a side view illustrating a backlight unit in accordance with a first embodiment of the present invention;
FIGs. 3a and 3b are cross-sectional views illustrating dot patterns having circular sectional shapes;
FIG. 4 is a view illustrating the distribution of dot patterns having varying densities;
FIG 5 is a plan view illustrating the upper surface of the light guide panel shown in FIG. 2;
FIGs. 6a and 6b are views illustrating the first and second prism projections shown in FIG. 5;
FIGs. 7a and 7b are views schematically illustrating various shapes of light guide panels; and
FIG. 8 is a side view illustrating a backlight unit in accordance with a second embodiment of the present invention.

### DETAILED DESCRIPTION OF THE INVENTION

Hereinafter, several aspects of the present invention will be described with reference to the accompanying drawings. For the purposes of clarity and simplicity, detailed descriptions of known functions and configurations incorporated herein is omitted, as the description of known functions and configurations may make the subject matter of the present invention rather unclear.

FIG. 2 is a side view illustrating a backlight unit in accordance with a first embodiment of the present invention. The backlight unit 200 includes a reflection panel 250, a light source 240, a light guide panel 210, a diffusion panel 260, and a prism sheet 270. In the coordinate system shown in FIG 2, the Z-axis represents the illumination direction of the backlight unit 200, the direction normal to the upper surface 214 of the light guide panel 210; the X-axis represents the advancing direction of the light emitted from the light source 240; and the Y-axis represents the direction perpendicular to the X-axis and the Z-axis.

The light guide panel 210 has upper and lower surface 214 and 212, which are opposite from each other, and first and second side surfaces 216 and 218, which are opposite from each other. The light source 240 faces the first side surface 216 of the light guide panel 210, and emits light rays toward the first side surface 216. The light source 240 may be, for example, a light emitting diode (LED), a laser diode (LD), or a lamp, or any other device that emits light. The light guide panel 210 guides the light rays introduced from the first side surface 216 toward the second side surface 218 through internal reflection between the upper and lower surfaces 214 and 212.

The light guide panel 210 also has a plurality of dot patterns 220 that are formed on or near the lower surface 212 of the panel 210. Each dot pattern 220 may have various sectional shapes, such as, for example, circular, elliptical, quadrangular, or rhombic shape. Moreover, the dot patterns 220 may be formed on the lower surface 212 of the light guide panel 210 in the form of intaglios, that is, grooves, or embossments that is, protrusions. Preferably, each dot pattern 220 of the present invention is in the shape of a hemispherical groove. However, each dot pattern 220 may also be a diffuse reflection pattern such as scratches, as the occasion demands.

Moreover, the respective dot patterns 220 may be formed by integrating the dot patterns 220 into the light guide panel 210. The dot patterns 220 may alternatively formed separately from the light guide panel 210, in the form of protrusions, and then are attached to the lower surface 212 of the light guide panel 210.

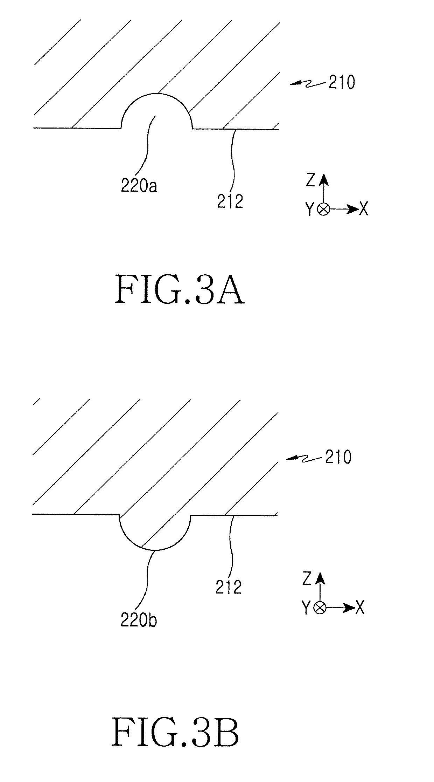

FIGs. 3a and 3b are cross-sectional views illustrating dot patterns having circular sectional shapes. FIG. 3a illustrates a dot pattern 220a having a circular sectional shape, formed on the lower surface 212 of the light guide plate 210 through engraving. Meanwhile, FIG. 3b illustrates a dot pattern 220b having a circular sectional shape, formed on the lower surface 212 of the light guide plate 210 through embossing.

Referring again to FIG. 2, each dot pattern 220 reflects and diffuses the incident light rays. In particular, each dot pattern 220 prevents a total internal reflection of light rays on the interface of the light guide panel 210 and external air, such that the light rays reflected and diffused by the dot pattern 220 are transmitted through the upper surface 214 of the light guide panel 210.

As the light rays in the light guide panel 210 progress from the first side surface 216 toward the second side surface 218, the intensity of the light rays is attenuated. Such attenuation causes a gradual decrease in the light appearing on the upper surface 214 of the light guide panel 210 from the first side surface 216 toward the second side surface 218, and causes a non-uniform brightness distribution on the light guide panel 210.

The non-uniform brightness distribution may be corrected by gradually increasing the density of the dot patterns 220 from the first side surface 216 toward the second side surface 218. The density of the dot patterns 220, for the purpose of describing the present invention, may be defined as the area occupied by the dot patterns 220 per unit area of the light guide panel. As such, the change in the density of the dot patterns 220 may be achieved by changing the number of the dot patterns 220 per unit area of the light guide panel 210, changing the size of the dot patterns 220 along the direction of the first side surface 216 to the second side surface 218 to change the area of the light guide panel 210 occupied by the dot patterns 220, or a combination thereof.

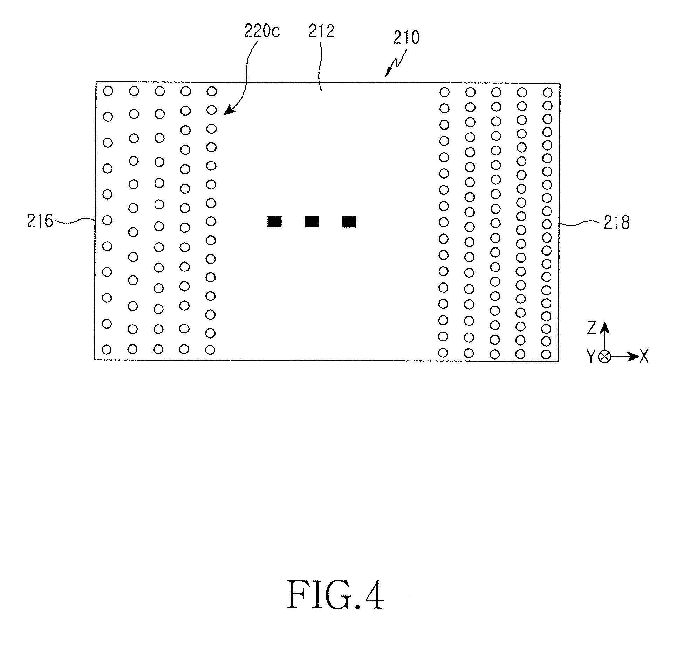

FIG. 4 is a view illustrating the distribution of dot patterns having varying densities. As can be readily seen from FIG. 4, the dot patterns 220c, which are formed on the lower surface 212 of the light guide panel 210, have the same shape and size, and the number of dot patterns 220c per a unit area gradually increases from the first side surface 216 toward the second side surface 218.

Returning to FIG. 2, the light guide panel 210 has a prism pattern 230. The prism pattern 230 is formed on the upper surface 214 of the light guide panel 210 and has prism projections disposed in the shape of the letter X. The prism pattern 230 has the design of a quadrangle having crossed stripes, preferably, the design of a rhombus having crossed stripes. The prism pattern 230 transmits and concentrates the light rays which are reflected and diffused by the dot patterns 220.

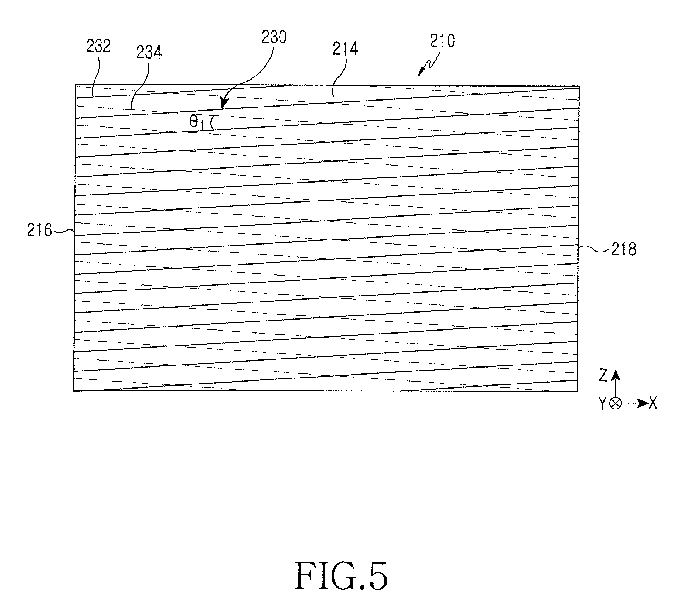

FIG. 5 is a plan view illustrating the upper surface 214 of the light guide panel 210. The prism pattern 230 formed on the upper surface 214 of the light guide panel 210 is composed of first prism projections 232 and second prism projections 234. As shown in FIG. 5, each of the lines 232 represents a first prism projection 232, and each of lines 234 represents a second prism projection 234.

The first prism projections 232 are parallel to one another, and have a uniform pitch. The first prism projections 232 transmit and concentrate the light rays reflected by the dot patterns 220 through the vertical planes thereof, through the vertical sectional planes perpendicular to the lengthwise direction of the first prism projections 232. The second prism projections 234 are formed such that the second prism projections 234 cross the first prism projections 232. The second prism projections 234 are parallel to one another, and have a uniform pitch. The second prism projections 234 transmit and concentrate the light rays reflected and diffused by the dot patterns 220 through the vertical planes thereof, through the vertical sectional planes perpendicular to the lengthwise direction of the second prism projections 234.

According to the present aspect of the invention, the first and second prism projections 232 and 234 may project from the upper surface 214 of the light guide panel 210. Each of the first and second prism projections 232 and 234 has a pitch no greater than 0.3 mm.

The angle θ₁ between the first and second prism projections 232 and 234 is in the range of 2~40°, whereas the angle between the X-axis and each of the prism projections 232 and 234 is in the range of 1~20°. If the prism projections are parallel to the X-axis, the light rays inside the light guide panel 210 may not be transmitted through the prism projections. Instead, the light ray may flow along the prism projections resulting in brightness deterioration. If the prism projections are perpendicular to the X-axis, the light rays in the light guide panel 210 may be attenuated quickly by the prism projections, and the amount of light rays which reach the second side surface 218 of the light guide panel 210 may decrease. In such a case brightness deterioration may also occur.

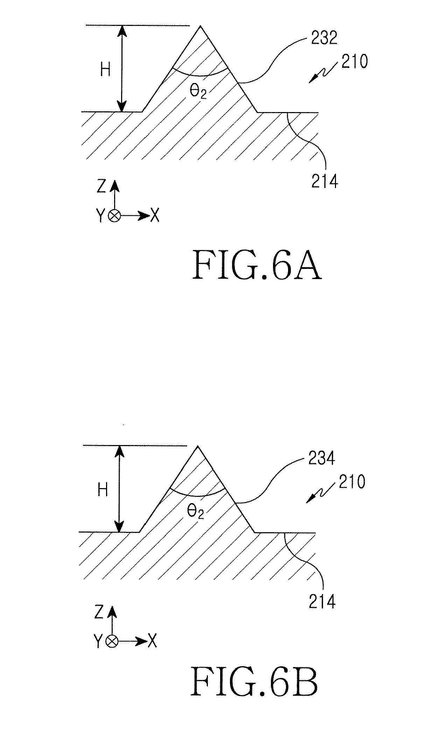

FIG. 6 is views illustrating the first and second prism projections 232 and 234. FIG. 6a is a cross-sectional view of the first prism projections 232, and FIG. 6b is a cross-sectional view of the second prism projections 234. The first and second prism projections 232 and 234 have the same sectional shape. Each of the first and second prism projections 232 and 234 has a prism angle θ₂ in the range of 60~120° and a height H in the range of 2~20 µm. Each of the first and second prism projections 232 and 234, for example, has the sectional shape of an isosceles triangle. Although each of the first and second prism projections 232 and 234 shown in FIG. 6 has a pointed contour the first and second prism projections 232 and 234 may also have a curved contour with a predetermined radius.

Referring again to FIG. 2, the reflection panel 250 is located such that the upper surface thereof faces the lower surface 212 of the light guide panel 210. The reflection panel 250 reflects the light rays transmitted through the lower surface 212 of the light guide panel 210 and redirects the light rays into the light guide panel 210. While the reflection panel 250, as shown in FIG. 2, has reflectance approaching to 100%, another reflectance panel with lower reflectance may be used as needed. For example, while it is illustrated in the present aspect of the present invention that the backlight unit 200 is used for unidirectional illumination, the backlight unit 200 may also be used for bidirectional illumination. In the latter case, the reflectance of the reflection panel 250 may be set at 50~80%, and another diffusion panel and another prism sheet can be sequentially arranged below the reflection panel 250.

The diffusion panel 260 is disposed such that the lower surface thereof faces the upper surface 214 of the light guide panel 210. The diffusion panel 260 scatters and transmits inputted light rays, and uniformize the brightness distribution, which is concentrated over high viewing angles.

The prism sheet 270 is located such that the lower surface thereof faces the upper surface of the diffusion panel 260. The prism sheet 270 includes a base plate 272 and a plurality of third prism projections 274 that project from the upper surface of the base plate 272 and that are parallel to one another. The third prism projections 274 can be arranged along various directions. For example, the third prism projections 274 are arranged along the X-axis, in the direction normal to the first side surface 216 of the light guide panel 210. The prism sheet 270 concentrates and transmits the light rays inputted from the diffusion panel 260. The prism sheet 270 provides brightness enhancement at low viewing angles

In the light guide panel according to the present invention, the end portion of the light guide panel, which is adjacent to the first side surface facing the light source, may be integrally formed with an inclined projection, or, alternatively, the light guide panel may have a slope on one of the upper and lower surfaces thereof. Such configuration improves optical coupling efficiency of the light guide panel with the light source.

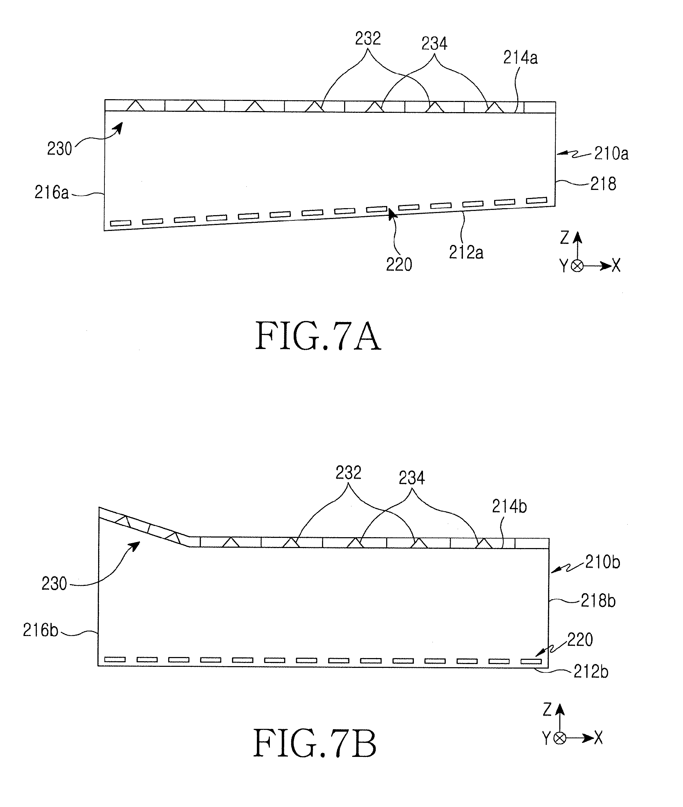

FIGs. 7a and 7b are views schematically illustrating various shapes of light guide panels. FIG. 7a illustrates a light guide panel 210a having a slope on one surface thereof. The light guide panel 210a has upper and lower surfaces 214a and 212a which are opposite from each other and first and second side surfaces 216a and 218a which are opposite from each other. Further, the light guide panel 210a has a plurality of dot patterns 220 that are formed on the lower surface 212a thereof, and a prism pattern 230 that is formed on the upper surface 214a thereof. When viewing the entire light guide panel 210a, the lower surface 212a is sloped with respect to the upper surface 214a, and the thickness of the light guide panel 210a decreases gradually from the first side surface 216a toward the second side surface 218a.

FIG. 7b illustrates a light guide panel 210b having an end portion that is integrally formed with an inclined projection. The light guide panel 210b has upper and lower surfaces 214b and 212b, which are opposite from each other, and first and second side surfaces 216b and 218b, which are opposite from each other. Further, the light guide panel 210b has a plurality of dot patterns 220, which are formed on the lower surface 212b thereof, and a prism pattern 230, which is formed on the upper surface 214b thereof. In the light guide panel 210b, the inclined projection is integrally formed on the upper surface of the end portion of the light guide panel 210b which is adjacent to the first side surface 216b. The inclined projection inclines upward toward the first side surface 216b of the light guide panel 210b so that the thickness of the inclined projection gradually decreases from the first side surface 216b toward the second side surface 218b.

As described above, the backlight unit according to the present invention can be used for bidirectional illumination.

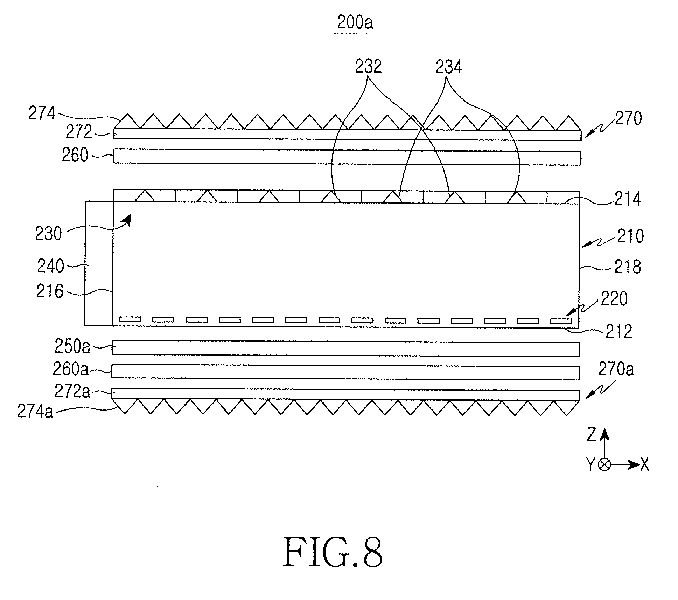

FIG. 8 is a side view illustrating a backlight unit in accordance with the second aspect of the present invention. The backlight unit 200a includes all the component parts of the backlight unit 200 shown in FIG. 2, and it further includes another diffusion panel and another prism sheet. Therefore, the same reference numerals will be used to refer to the same component parts, and detailed descriptions thereof will be omitted. The backlight unit 200a includes a reflection panel 250a, a light source 240, a light guide panel 210, first and second diffusion panels 260 and 260a, and first and second prism sheets 270 and 270a.

The reflection panel 250a is located such that the upper surface thereof faces the lower surface 212 of the light guide panel 210, and has reflectance of 50~80%. The reflection panel 250a reflects one part of the light rays transmitted through the lower surface 212 of the light guide panel 210 so that the corresponding part of the light rays is redirected into the light guide panel 210, and transmits the other part of the light rays transmitted through the lower surface 212 of the light guide panel 210.

The second diffusion panel 260a is located such that the upper surface thereof faces the lower surface 212 of the light guide panel 210. The second diffusion panel 260a scatters and transmits inputted light rays, and uniformizes the brightness distribution, which is concentrated over high viewing angles.

The second prism sheet 270a is located such that the upper surface thereof faces the lower surface of the second diffusion panel 260a. The second prism sheet 270a includes a base plate 272a and a plurality of fourth prism projections 274a, which project from the upper surface of the base plate 272a and are parallel to one another. The fourth prism projections 274a may be arranged along various directions. For example, the fourth prism projections 274a are arranged along the X-axis, in the direction normal to the first side surface 216 of the light guide panel 210. The second prism sheet 270a concentrates and transmits the light rays inputted from the second diffusion panel 260a. The second prism sheet 270a provides brightness enhancement at low viewing angles

As apparent from the above description, one advantage of the light guide panel and the backlight unit according to the present invention is that less number of the prism sheets are required in the present invention, as the present invention has a prism pattern formed on the upper surface of the light guide panel and as the present invention has prism projections crossing one another in the shape of the letter X. As a consequence, the thickness of the backlight unit may be reduced significantly, the optical insertion loss may be reduced, and the optical efficiency and entire brightness can be elevated.

In addition, as the light guide panel and the backlight unit of the present invention requires less number of the prism sheets, the cost of manufacturing the light guide panel or the backlight may be lowered.

Further, as the light guide panel and the backlight unit according to the present invention has smaller thickness compared to the conventional art, the light guide panel and the backlight unit can be easily adapted for a mobile terminal.

While the invention has been shown and described with reference to certain preferred embodiments thereof, it will be understood by those skilled in the art that various changes in form and details may be made therein without departing from the spirit and scope of the invention as defined by the appended claims.

## Claims

1. A light guide panel having upper and lower surfaces, which are opposite from each other, and first and second side surfaces, which are opposite from each other, for guiding light rays inputted from the first side surface toward the second side surface through internal reflection between the upper and lower surfaces, the light guide panel comprising:
a plurality of dot patterns being formed on the lower surface and being configured to reflect and diffuse light rays incident upon each dot patterns;
first prism projections being formed on the upper surface, being parallel to one another, and being configured to transmit and concentrate light rays reflected by the dot patterns; and
second prism projections being formed on the upper surface, being parallel to one another, being configured to cross the first prism projections, and being configured to transmit and concentrate light rays reflected by the dot patterns.

2. The light guide panel according to claim 1, further comprising a reflectance panel being configured to reflect at least a portion of the light rays exiting the light guide panel through the lower surface back to the light guide panel.

3. A backlight unit comprising:
a light guide panel having upper and lower surfaces, which are opposite from each other, and first and second side surfaces, which are opposite from each other, the light guide panel being configured to guide light rays inputted from the first side surface toward the second side surface through internal reflection between the upper and lower surfaces; and
a light source being configured to face the first side surface of the light guide panel and being configured to output light rays toward the first side surface, wherein the light guide panel comprises:
a plurality of dot patterns being formed on the lower surface and being configured to reflect and diffuse incident light rays; and
a prism pattern formed on the upper surface and having prism projections in a shape of a letter X, the prism pattern being configured to transmit and concentrating light rays reflected by the dot patterns.

4. The backlight unit according to claim 3, wherein the prism pattern has the design of a quadrangle having crossed stripes.

5. The backlight unit according to claim 3, wherein the prism pattern comprises:
first prism projections being formed on the upper surface, being parallel to one another, and being configured to transmit and concentrate light rays reflected by the dot patterns; and
second prism projections being formed on the upper surface, being parallel to one another, being configured to cross the first prism projections, and being configured to transmit and concentrate light rays reflected by the dot patterns.

6. The backlight unit according to claim 3, further comprising a diffusion panel being disposed on the light guide panel to scatter and being configured to transmit inputted light rays.

7. The backlight unit according to claim 3, further comprising a prism sheet being disposed over the light guide panel and being configured to concentrate and transmit inputted light rays.

8. The backlight unit according to claim 3, further comprising a reflection panel being disposed below the light guide panel and being configured to reflect light rays transmitted through the lower surface of the light guide panel to the light guide panel.

9. The backlight unit according to claim 3 or the light guide panel of claim 1, wherein a density of the dot patterns gradually increases from the first side surface toward the second side surface.

10. The backlight unit according to claim 3 or the light guide panel of claim 1, wherein each dot pattern comprises a groove defined on the lower surface of the light guide panel.

11. The backlight unit according to claim 5 or the light guide panel of claim 1, wherein each of the first and second prism projections has a pitch no greater than 0.3 mm.

12. The backlight unit according to claim 5 or the light guide panel of claim 1, wherein an angle between the first and second prism projections is in the range of 2~40°.

13. The backlight unit according to claim 5 or the light guide panel of claim 1, wherein each of the first and second prism projections has a prism angle of 60~120° and a height of 2~20 µm.

14. The backlight unit according to claim 3 or the light guide panel of claim 1, wherein a portion of the upper surface of the light guide panel has a non-parallel relationship with the lower surface of the light guide panel.
